# EUROPÄISCHE PATENTSCHRIFT

(11) **EP 2 828 961 B1**
(45) Veröffentlichungstag und Bekanntmachung des Hinweises auf die Patenterteilung: **18.09.2019**
(21) Anmeldenummer: 13702593.8
(22) Anmeldetag: 23.01.2013
(51) Int. Cl.: H02K 11/21, H02K 26/00, H02K 1/18, H02K 3/52, B67C 3/22

(54) **DIREKTANTRIEB FÜR EINE ROTATIONSMASCHINE, INSBESONDERE FÜR EINE BEHÄLTERBEHANDLUNGSMASCHINE**
DIRECT DRIVE FOR A ROTATION MACHINE, PARTICULARLY FOR A CONTAINER TREATMENT MACHINE
ENTRAÎNEMENT DIRECT POUR UNE MACHINE TOURNANTE, EN PARTICULIER, UNE MACHINE DE TRAITEMENT DE RÉCIPIENTS

(30) Priorität: 23.03.2012 DE 102012204721
(43) Veröffentlichungstag der Anmeldung: 28.01.2015
(73) Patentinhaber: Schaeffler Technologies AG & Co. KG, 91074 Herzogenaurach (DE)
(72) Erfinder: SCHMID, Günter, 90475 Nürnberg (DE); DITTENHÖFER, Thomas, 97519 Humprechtshausen (DE); SCHÜLER, Ralf, 98530 Wichtshausen (DE)
(86) Internationale Anmeldenummer: PCT/EP2013/051205
(87) Internationale Veröffentlichungsnummer: WO 2013/139502

(56) Entgegenhaltungen:
- DE-A1- 10 210 071
- DE-A1- 19 756 575

## Beschreibung

### Gebiet der Erfindung

Die Erfindung betrifft einen Direktantrieb für eine Rotationsmaschine nach den oberbegriffsbildenden Merkmalen des Patentanspruchs 1, welcher insbesondere vorteilhaft an Behälterbehandlungsmaschinen anwendbar ist.

### Hintergrund der Erfindung

Behälterbehandlungsmaschinen finden vor allem in der Getränke- und Arzneimittelindustrie sowie in der chemischen Industrie Anwendung und sind in unterschiedlichsten Ausführungen als Streck-Blas-Maschinen zur Herstellung von Kunststoffbehältern oder als Maschinen zum Reinigen, Abfüllen, Verschließen, Bedrucken und Etikettieren von Flaschen, Dosen, Tuben oder anderen Behältern aus Kunststoff oder Metall bekannt. Sie sind in aller Regel als Rundläufermaschinen ausgebildet, die im Wesentlichen aus einem feststehenden Maschinenteil und aus einem um eine vertikale Maschinenachse rotierenden Maschinenteil bestehen, wobei der rotierende Maschinenteil über ein zwischen den Maschinenteilen angeordnetes und aus einem äußeren Lagerring, einem inneren Lagerring sowie einer Vielzahl zwischen diesen Lagerringen abrollender Wälzkörper bestehendes Wälzlager mit dem feststehenden Maschinenteil drehbar verbunden ist. Auf dem rotierenden Maschinenteil sind dann zumeist ein Drehtisch sowie mehrere Behandlungsstationen mit Funktionselementen angeordnet, die an die jeweilige Art der Behandlung angepasst sind und mit den zu behandelnden Behältern zusammenwirken. Je nach Anlagengröße und Verwendungszweck können diese Drehtische einen Durchmesser bis zu 7 m und ein Gewicht von bis zu 20 t aufweisen, die mit Umdrehungsgeschwindigkeiten von bis zu 6 min⁻¹ betrieben werden und trotz der daraus resultierenden hohen Belastungen in ihrer Umdrehungsgeschwindigkeit genau regelbar sein müssen, um beispielsweise Kapazitätsschwankungen ausgleichen zu können.

Gemäß WO 2008/022737 A1 erfolgt der Antrieb derartiger Behälterbehandlungsmaschinen in herkömmlicher Weise durch einen Servomotor, der über ein entsprechendes Untersetzungsgetriebe ein Ritzel bewegt, welches in eine Verzahnung am rotierenden Maschinenteil eingreift und diesen somit dreht.

Nachteilig bei einem solchen herkömmlichen Antrieb ist es jedoch, dass dieser nicht verschleißfrei arbeitet und dass die Ritzel-Verzahnungs-Kombination regelmäßig stark befettet werden muss, um die gewünschte Lebensdauer sicherzustellen. Dies bewirkt jedoch, dass die Umgebung durch herabtropfendes Schmierfett verschmutzt werden kann, was insbesondere in Getränkeabfüllanlagen im Hinblick auf geltende Hygienebestimmungen nachteilig ist. Zudem werden durch die Verzahnungs-Ritzel-Kombination beim Abwälzen akustische Geräusche und Körperschall sowie mechanische Verlustleistung erzeugt, was zu einem unerwünscht hohen Geräuschpegel beiträgt und nachteilig für die Energieeffizient der Anlage ist. Des Weiteren hat es sich bei dem herkömmlichen Antriebskonzept gezeigt, dass die damit angetriebenen Maschinen im Notaus-Fall aufgrund des hohen Massenträgheitsmoments des drehend gelagerten Maschinenteiles nicht mittels des Motors abgebremst werden können, weil dadurch ansonsten das Getriebe und das Ritzel überlastet und zerstört werden würden. Es sind daher zusätzliche mechanische Bremsen erforderlich, welche die Aufwendungen und Kosten für die Maschine in nachteiliger Weise erhöhen.

Zur Vermeidung dieser Nachteile wurde es durch die WO 2008/022737 A1 deshalb vorgeschlagen, den Antrieb einer Behälterbehandlungsmaschine durch einen Direktantrieb mittels eines Drehmomentmotors zu realisieren, wobei am rotierenden Maschinenteil anstelle der bisherigen Verzahnung umlaufend ein Kranz mit einer Vielzahl von Magneten vorgesehen ist und am feststehenden Maschinenteil zumindest ein aus einer Vielzahl elektrischer Spulen bestehender und nur einen Teilsektor des Magnetkranzes überdeckender Stator angeordnet ist, so dass durch ein bei Bestromung des Stators erzeugtes elektromagnetisches Feld im Zusammenwirken mit den Magneten der rotierende Maschinenteil in eine definierte Drehbewegung versetzbar ist. Die Größe des Stators und die Anzahl der integrierten elektrischen Spulen sind dabei variierbar und von der Größe, dem notwendigen Drehmoment und der geforderten Umdrehungsgeschwindigkeit des Drehtisches abhängig. Zur Erzielung eines maximalen Drehmoments wird es empfohlen, mehrere derartiger Statoren um den Magnetkranz herum anzuordnen.

Durch die DE 102 10 071 A1 ist ein weiterer, als Direktantrieb für eine Behälterbehandlungsmaschine geeigneter Drehmomentmotor bekannt, der aus einer Vielzahl am rotierenden Maschinenteil umlaufend angeordneter Magneten und aus einem durch eine Vielzahl am feststehenden Maschinenteil angeordneter elektrischer Spulen gebildeten Stator besteht, so dass durch ein bei Bestromung des Stators erzeugtes elektromagnetisches Feld im Zusammenwirken mit den Magneten der rotierende Maschinenteil in eine definierte Drehbewegung versetzbar ist. Der Stator ist dabei als sämtliche Magnete am rotierenden Maschinenteil lückenlos überdeckender Vollring von 360° ausgebildet, der aus mehreren aneinander angrenzenden und durch eine elektrische Reihenschaltung miteinander verbundenen Statorringsegmenten sowie aus mehreren zwischen den Statorringsegmenten angeordneten Anschlagelementen zur Fixierung der Statorringsegmente in Umfangs- und Radialrichtung zusammengesetzt ist.

Die genannten Direktantriebe haben zwar den Vorteil, dass sie keine mechanische Verbindung zwischen dem feststehenden und dem rotierenden Maschinenteil mehr aufweisen und dadurch verschleißfrei arbeiten, sie haben sich jedoch dahingehend als nachteilig erwiesen, dass insbesondere bei sehr großen Drehtischdurchmessern, welche mit sehr großen Drehmomenten betrieben werden, die zumeist am entsprechend groß ausgebildeten Wälzlager zwischen dem feststehenden und dem rotierenden Maschinenteil befestigten Magnete in sehr hoher Stückzahl und auch in großen Abmessungen erforderlich sind und durch ihren hohen Weltmarktpreis sehr hohe Herstellungskosten für den Antrieb verursachen. Der aus der DE 102 10 071 A1 bekannte Drehmomentmotor hat darüber hinaus noch den Nachteil, dass für den Abtastsensor des integrierten Messsystems zur Positionsbestimmung des rotierenden Maschinenteils eine gesonderte Halterung notwendig ist.

### Aufgabe der Erfindung

Ausgehend von den Lösungen des bekannten Standes der Technik liegt der Erfindung deshalb die Aufgabe zu Grunde, einen Direktantrieb für eine Rotationsmaschine, insbesondere für eine Behälterbehandlungsmaschine, zu konzipieren, bei welchem die genannten Nachteile wirksam vermieden werden.

### Beschreibung der Erfindung

Erfindungsgemäß wird diese Aufgabe bei einem Direktantrieb nach dem Oberbegriff des Anspruchs 1 derart gelöst, dass eines der zwischen den Statorringsegmenten angeordneten Anschlagelemente zugleich Halterung für einen Abtastsensor ist, der mit einer inkrementellen oder absoluten, magnetischen oder induktiven Winkelteilung am rotierenden Maschinenteil ein Messsystem zur Positionsbestimmung des rotierenden Maschinenteils bildet.

Der am Stator feststehenden Maschinenteil ist dabei als sämtliche Magnete am rotierenden Maschinenteil lückenlos überdeckender Vollring von 360° ausgebildet ist, der aus mehreren aneinander angrenzenden und durch eine elektrische Reihenschaltung miteinander verbundenen Statorringsegmenten sowie aus mehreren zwischen den Statorringsegmenten angeordneten Anschlagelementen zur Fixierung der Statorringsegmente in Umfangs- und Radialrichtung zusammengesetzt ist.

Die einzelnen Statorringsegmente bestehen hierbei jeweils aus einem eisenmetallischem Joch und aus einer Mehrzahl an dessen Ober- und Unterseite übereinander gestapelter Zahnbleche, um deren Zähne Kupferwicklungen zur Bildung der einzelnen elektrischen Spulen gewickelt sind.

Die Anzahl der Zähne und der dadurch gebildeten elektrischen Spulen ist dabei variierbar und von der Größe und Anzahl der einzelnen Statorringsegmente, von der Höhe des notwendigen Drehmomentes und der geforderten Umdrehungsgeschwindigkeit des Drehtisches sowie von der Anzahl und Größe der verwendeten Magnete abhängig. Als Magnete haben sich dabei besonders vorteilhaft Permanentmagnete aus den Werkstoffen Hartferrit, Samarium-Cobalt oder Neodym-Eisen-Bor erwiesen, die auf der Außenmantelfläche des mit dem rotierenden Maschinenteil verbundenen äußeren Lagerrings befestigt sind.

Die zwischen den Statorringsegmenten angeordneten Anschlagelemente weisen bevorzugt die Form von Kreisringsegmenten auf, die mit den verlängert ausgebildeten Jochs und mit den radialen Seitenflächen der Statorringsegmente in Anschlagkontakt stehen. Diese kreisringsegmentförmigen Anschlagelemente sind auf dem feststehender Maschinenteil bevorzugt so verschraubt, dass deren zu den Magneten weisende Innenseite in Verlängerung der Innenseiten der Statorringsegmente angeordnet ist. Die Jochs der Statorringsegmente, deren Außenseite zugleich die Außenseite der Statorringsegmente bildet, sind dabei beidseitig länger als die Statorringsegmente ausgebildet und liegen mit den Innenseiten ihrer Verlängerungen an den Außenseiten der Anschlagelemente an. Die kürzer zueinander beabstandeten radialen Seitenflächen der Statorringsegmente liegen dagegen an den Seitenflächen der der Anschlagelemente an, so dass die Winkellage der Statorringsegmente zueinander und deren Luftspalt zu den Magneten definiert und sichergestellt ist. Anstelle von kreisringsegmentförmigen Anschlagelementen ist es jedoch auch möglich, am feststehenden Maschinenteil entsprechende Anschlagbolzen od. dgl. zu befestigten, an denen die verlängert ausgebildeten Jochs und die radialen Seitenflächen der Statorringsegmente in gleicher Weise anliegen.

Erfindungsgemäß ist der Abtastsensor direkt auf einem der Anschlagelemente befestigt und die Winkelteilung bevorzugt an der Außenmantelfläche des drehenden äußeren Lagerrings des zwischen den Maschinenteilen angeordneten Wälzlagers angeordnet. Somit kann direkt am äußeren Lagerring, also unmittelbar und drehsteif und somit fehlerfrei die jeweilige Winkelposition des Drehtisches der Rotationsmaschine erfasst und dessen Position im Zusammenwirken mit einem in den Servocontroller implementierten Lageregelkreis permanent geregelt werden.

Vorteilhafte Ausgestaltungen und Weiterbildungen des erfindungsgemäß ausgebildeten Direktantriebes werden in den Unteransprüchen beschrieben.

Danach ist es gemäß Anspruch 2 bei dem erfindungsgemäß ausgebildeten Direktantrieb vorgesehen, dass die Magnete des Drehmomentmotors und die Winkelteilung des Messsystems bevorzugt an der Außenmantelfläche des mit dem rotierenden Maschinenteil verbundenen äußeren Lagerrings des Wälzlagers angeordnet sind und der Stator den äußeren Lagerring umschließt. Dadurch ist der Drehmomentmotor als Innenläufermotor ausgebildet, wobei es als alternative Ausführungsform des erfindungsgemäßen Direktantriebes jedoch auch möglich ist, diesen als Außenläufermotor auszubilden, bei dem die Magnete des Drehmomentmotors und die Winkelteilung des Messsystems an der Innenmantelfläche des mit dem rotierenden Maschinenteil verbundenen inneren Lagerrings des Wälzlagers angeordnet sind und der Stator den inneren Lagerring umschließt.

Als vorteilhafte Ausgestaltung des erfindungsgemäß ausgebildeten Direktantriebes wird es durch Anspruch 3 des Weiteren vorgeschlagen, dass die Statorringsegmente und die Anschlagelemente des Stators sowie der Abtastsensor und die Winkelteilung des Messsystems einschließlich der Magnete durch ein ringförmiges Gehäuse aus Edelstahltopfblechen gegen Umgebungseinflüsse abgedichtet sind. Dies hat sich insbesondere bei Antrieben für Getränkeabfüllanlagen als besonders vorteilhaft erwiesen, da somit das Eindringen von Flüssigkeiten in den Antrieb vermieden wird und sich der Aufwand für die Sauberhaltung der Getränkeabfüllanlage verringert.

Gemäß den Ansprüchen 4 und 5 zeichnet sich der erfindungsgemäß ausgebildete Direktantrieb schließlich noch dadurch aus, dass die einzelnen Spulen der Statorringsegmente in drei um 120° elektrisch versetzten Phasen mittels einer Sternschaltung elektrisch in Reihe geschaltet sind und über einen einzelnen Servocontroller mit einem Spannungs-Zwischenkreis-Umrichter ansteuerbar sind. Dadurch wird jede Spule des Stators phasenversetzt zu den jeweils zuvor angeordneten Spulen nacheinander angesteuert, so dass die entstehenden umlaufenden elektromagnetischen Felder im Zusammenwirken mit den Magnetfeldern der Permanentmagnete eine Drehbewegung des rotierenden Maschinenteils bewirken. Dabei sind alle benachbarten Statorringsegmente durch je ein Verbindungskabel mit einem Steckverbinder miteinander verbunden und nur ein erstes und ein letztes Statorringsegment weist anstelle eines Verbindungskabels einen Servocontrolleranschluss bzw. Sternschaltelement auf. Darüber hinaus ist es vorteilhaft, wenn der Spannungs-Zwischenkreis-Umrichter einen bidirektionalen Leistungsfluss erlaubt, da somit in der Steuerung ein Notlaufprogramm vorgesehen werden kann, welches im Falle eines Maschinenstops oder eines Stromausfalls ein winkelsynchrones Abschalten der Spulen aller Statorringsegmente und aller anderen Antriebe einer komplexen Anlage unter Nutzung der Energierückspeisung in das Stromnetz erlaubt.

Der erfindungsgemäß ausgebildete Direktantrieb für eine Rotationsmaschine weist somit gegenüber den aus dem Stand der Technik bekannten Direktantrieben den Vorteil auf, dass der Stator des Drehmomentmotors unabhängig vom Durchmesser, dem Drehmoment und der Umfangsgeschwindigkeit des Drehtisches der Rotationsmaschine immer als sämtliche Magnete am rotierenden Maschinenteil überdeckender kompletter Vollring von 360° ausgebildet ist und somit keine freien Winkelbereiche mehr zwischen einzelnen Statoren zu den Magneten aufweist, die eine potenzielle Gefahrenquelle für das Montage- und Bedienpersonal darstellen könnten. Gleichzeitig steht dadurch der komplette Vollring zu Drehmomentübertragung auf den Drehtisch zu Verfügung, so dass eine Verringerung der Spurhöhe oder der Spurbreite der Permanentmagnete und damit eine Einsparung des kostenintensiven Magnetmaterials möglich ist. Die Zusammensetzung des Stators aus einzelnen, in Reihe geschalteten und somit für sich nicht selbstständig betreibbaren Statorringsegmenten und dazwischen angeordneten Anschlagelementen hat dabei den Vorteil, dass der Verkabelungsaufwand aller Statorringsegmente gegenüber einzeln geschalteten separaten Statoren wesentlich geringer ist und dass im Wartungs- oder Reparaturfall einzelne Statorringsegmente in radialer Richtung ausgetauscht werden können, ohne den schweren Drehtisch der Rotationsmaschine zu diesem Zweck demontieren oder anheben zu müssen. Wird in einem solchen Wartungs- oder Reparaturfall eines der Statorringsegmente entfernt, ist zwar der gesamte Stator aufgrund des unterbrochenen Stromflusses durch alle Statorringsegmente nicht mehr funktionsfähig, jedoch ist dies nicht nachteilig, da im Wartungs- oder Reparaturfall alle Antriebe stromlos geschaltet sind. Darüber hinaus sorgen die Statorringsegmente und die zwischen diesen angeordneten Anschlagelemente dafür, dass die radial nach innen wirkenden magnetischen Anziehungskräfte zwischen den Statorringsegmenten und den Permanentmagneten sich innerhalb des gebildeten Statorringes abstützen und dadurch das feststehende Maschineteil und der mit diesem verbundene Lagerring des Wälzlagers nicht mehr verzogen werden.

Zusätzlich kann die Zuverlässigkeit des erfindungsgemäßen Direktantriebes an Behälterbehandlungsmaschinen noch dadurch gesteigert werden, wenn das zwischen dem feststehenden und dem rotierenden Maschinenteil angeordnete Wälzlager mit einem aus der DE 10 2007 042 254 A1 bekannten Schmierstoffqualitätssensor ausgerüstet wird. Dieser kann in einer bis in die Wälzkörperlaufbahn reichenden Radialbohrung im feststehenden Lagerring so befestigt werden, dass durch dessen sensitive Stirnseite der Wassergehalt, die Alterung, die Temperatur und der Verschmutzungsgrad des Schmierstoffs in der Wälzkörperlaufbahn während des Anlagenbetriebes kontinuierlich gemessen werden kann. Sobald einer dieser Messwerte den jeweiligen voreingestellten Schwellwert überschreitet, wird eine Warnmeldung über eine Auswertelektronik an die Maschinensteuerung weitergeleitet, so dass ein Nachschmiervorgang über eine in einer weiteren Radialbohrung im inneren Lagerring angeordnete Fettpumpe oder Wartungsarbeiten veranlasst werden können. Insbesondere bei Getränkeabfüllanlagen hat es sich als besonders vorteilhaft erwiesen, den Feuchtigkeitsgehalt des Schmierstoffes im Wälzlager des Drehtisches zu überwachen, da Getränkeabfüllanlagen regelmäßig mit wasserhaltigen Reinigungs- und Desinfektionsmitteln behandelt werden. Mit Hilfe des Schmierstoffqualitätssensors ist es dann möglich, nur in dem Fall einen Nachschmiervorgang über die Fettpumpe zu veranlassen, wenn dies wirklich erforderlich ist, so dass auf diese Weise der Schmierstoffeintrag in das Wälzlager optimiert und somit die Sauberhaltung der gesamten Maschine verbessert werden kann.

Eine weitere Steigerung der Zuverlässigkeit und der Verfügbarkeit des erfindungsgemäßen Direktantriebes an Behälterbehandlungsmaschinen ist darüber hinaus noch dadurch möglich, wenn in das Wälzlager zwischen dem feststehenden und dem rotierenden Maschinenteil ein ebenfalls an sich bekanntes Zustandsüberwachungssystem integriert wird. Ein solches Zustandsüberwachungssystem besteht im Wesentlichen aus einem Beschleunigungssensor mit nachgeschaltetem Verstärker und Auswertsystem, mit Hilfe dessen Vibrationen bzw. Körperschall detektiert und ausgewertet werden können, die bei Überrollungen von Wälzkörpern über beschädigte Laufbahnen an einem oder beiden Lagerringen auftreten. Der Beschleunigungssensor wird dabei in eine weitere Radialbohrung in der Innenmantelfläche des feststehenden Wälzlagerrings so eingeschraubt, dass dieser sehr nahe der Wälzkörperlaufbahn und den Wälzkörpern gegenüberliegend angeordnet ist.

Schließlich ist es noch ein Vorteil des erfindungsgemäß ausgebildeten Direktantriebes, dass bei diesem nur ein einziges Statorringsegment mit einem Temperatursensor zur Überwachung der Wicklungstemperatur ausgerüstet und mit dem Servocontroller verbunden werden muss, da alle Statorringsegmente nur im Zusammenwirken bzw. nur in Anordnung zu einem vollständigen Statorring einen funktionsfähigen Drehmomentmotor bilden.

### Kurze Beschreibung der Zeichnungen

Eine bevorzugte Ausführungsform des erfindungsgemäß ausgebildeten Direktantriebes wird nachfolgend unter Bezugnahme auf die beigefügten Zeichnungen näher erläutert. Dabei zeigen:
- Figur 1: eine schematische Darstellung einer Draufsicht auf einen erfindungsgemäß ausgebildeten Direktantrieb für eine Behälterbehandlungsmaschine;
- Figur 2: die Vergrößerung eines Querschnittes durch den mit einem feststehenden und einem rotierenden Maschinenteil verbundenen erfindungsgemäßen Direktantrieb;
- Figur 3: die schematische Darstellung der elektrischen Verschaltung des erfindungsgemäß ausgebildeten Direktantriebes.

### Ausführliche Beschreibung der Zeichnungen

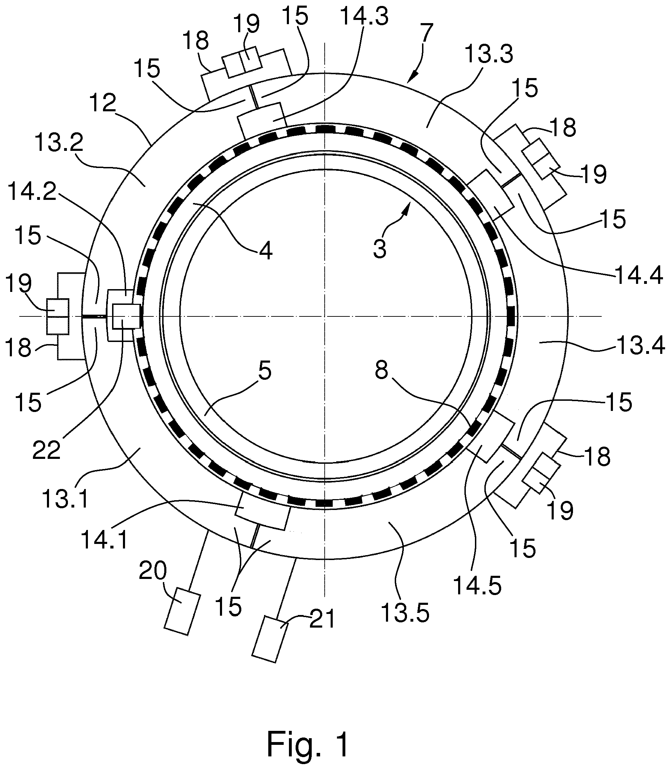

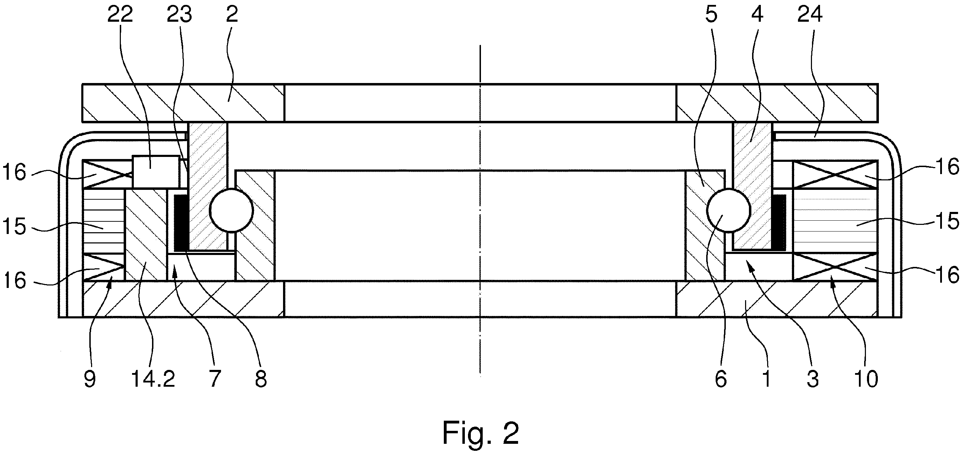

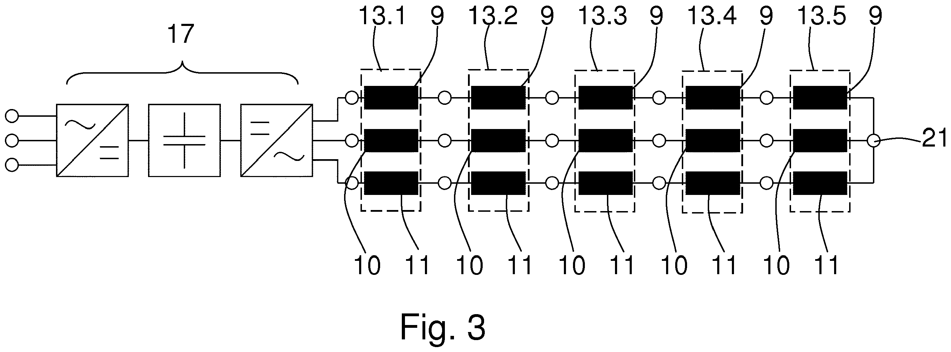

Aus der Schnittdarstellung gemäß Figur 2 geht ein für eine Behälterbehandlungsmaschine geeigneter Direktantrieb hervor, der im Wesentlichen aus einem feststehenden Maschinenteil 1 und einem um eine vertikale Maschinenachse rotierenden Maschinenteil 2 besteht, wobei das rotierende Maschinenteil 2 über ein zwischen den Maschinenteilen 1, 2 angeordnetes und aus einem äußeren Lagerring 4, einem inneren Lagerring 5 sowie einer Vielzahl zwischen diesen Lagerringen 4, 5 abrollender Wälzkörper 6 bestehendes Wälzlager 3 mit dem feststehenden Maschinenteil 1 drehbar verbunden sowie durch einen Drehmomentmotor 7 antreibbar ist. In Zusammenschau mit den Figuren 1 und 3 wird dabei deutlich, dass am rotierenden Maschinenteil 1 umlaufend eine Vielzahl von Magneten 8 vorgesehen ist und dass am feststehenden Maschinenteil 1 ein aus einer Vielzahl elektrischer Spulen 9, 10, 11 bestehender Stator 12 angeordnet ist, so dass durch ein bei Bestromung des Stators 12 erzeugtes elektromagnetisches Feld im Zusammenwirken mit den Magneten 8 der rotierende Maschinenteil 2 in eine definierte Drehbewegung versetzt werden kann.

Darüber hinaus ist Figur 1 entnehmbar, dass der Stator 12 am feststehenden Maschinenteil 1 als sämtliche Magnete 8 am rotierenden Maschinenteil 2 lückenlos überdeckender Vollring von 360° ausgebildet ist, der aus mehreren aneinander angrenzenden und durch eine elektrische Reihenschaltung miteinander verbundenen Statorringsegmenten 13.1, 13.2, 13.3, 13.4, 13.5 sowie aus mehreren zwischen den Statorringsegmenten 13.1, 13.2, 13.3, 13.4, 13.5 angeordneten Anschlagelementen 14.1, 14.2, 14.3, 14.4, 14.5 zur Fixierung der Statorringsegmente 13.1, 13.2, 13.3, 13.4, 13.5 in Umfangs- und Radialrichtung zusammengesetzt ist. In beispielhafter Ausführung sind dabei die Magnete 8 des Drehmomentmotors 7 an der Außenmantelfläche des mit dem rotierenden Maschinenteil 1 verbundenen äußeren Lagerrings 4 des Wälzlagers 3 angeordnet, während der Stator 12 den äußeren Lagerring 4 komplett umschließt.

Wie die Figuren 1 und 2 des Weiteren zeigen, bestehen die einzelnen Statorringsegmente 13.1, 13.2, 13.3, 13.4, 13.5 des Stators 12 jeweils aus einem eisenmetallischem Joch 15 und aus einer Mehrzahl an dessen Ober- und Unterseite übereinander gestapelter Zahnbleche 16, um deren Zähne Kupferwicklungen zur Bildung der einzelnen elektrischen Spulen 9, 10, 11 gewickelt sind. Diese einzelnen Spulen 9, 10, 11 sind, wie in Figur 3 abgebildet, in drei um 120° elektrisch versetzten Phasen mittels einer Sternschaltung elektrisch in Reihe geschaltet und können über einen nicht dargestellten einzelnen Servocontroller mit einem Spannungs-Zwischenkreis-Umrichter 17 angesteuert werden. Dabei sind alle benachbarten Statorringsegmente 13.1, 13.2, 13.3, 13.4, 13.5 durch je ein Verbindungskabel 18 mit einem Steckverbinder 19 miteinander verbunden und nur ein erstes und ein letztes Statorringsegment 13.1, 13.5 weist anstelle eines Verbindungskabels 18 einen Servocontrolleranschluss 20 bzw. Sternschaltelement 21 auf.

Ebenso ist in Figur 1 zu sehen, dass die zwischen den Statorringsegmenten 13.1, 13.2, 13.3, 13.4, 13.5 angeordneten Anschlagelemente 14.1, 14.2, 14.3, 14.4, 14.5 die Form von Kreisringsegmenten aufweisen, die mit den verlängert ausgebildeten Jochs 15 und mit den nicht näher bezeichneten radialen Seitenflächen der Statorringsegmente 13.1, 13.2, 13.3, 13.4, 13.5 in Anschlagkontakt stehen. Zusätzlich ist das zwischen den Statorringsegmenten 13.1 und 13.2, angeordnet Anschlagelement 14.2 zugleich als Halterung für einen Abtastsensor 22 vorgesehen, der mit einer inkrementellen oder absoluten, magnetischen oder induktiven Winkelteilung 23, die, wie aus Figur 2 ersichtlich, ebenfalls an der Außenmantelfläche des mit dem rotierenden Maschinenteil 1 verbundenen äußeren Lagerrings 4 des Wälzlagers 3 angeordnet ist, ein Messsystem zur Positionsbestimmung des rotierenden Maschinenteils 1 bildet.

Schließlich ist in Figur 2 noch zu sehen, dass die Statorringsegmente 13.1, 13.2, 13.3, 13.4, 13.5 und die Anschlagelemente 14.1, 14.2, 14.3, 14.4, 14.5 des Stators 12 sowie der Abtastsensor 22 und die Winkelteilung 23 des Messsystems einschließlich der Magnete 8 durch ein ringförmiges Gehäuse 24 aus Edelstahltopfblechen gegen Umgebungseinflüsse abgedichtet sind. Dies hat sich insbesondere bei Direktantrieben für Getränkeabfüllanlagen als besonders vorteilhaft erwiesen, da somit das Eindringen von Flüssigkeiten in den Direktantrieb vermieden wird.

**Bezugszahlenliste**

| | | | |
|---|---|---|---|
| 1 | feststehender Maschinenteil | 14.1 | Anschlagelement |
| 2 | rotierender Maschinenteil | 14.2 | Anschlagelement |
| 3 | Wälzlager | 14.3 | Anschlagelement |
| 4 | äußerer Lagerring von 3 | 14.4 | Anschlagelement |
| 5 | innerer Lagerring von 3 | 14.5 | Anschlagelement |
| 6 | Wälzkörper von 3 | 15 | Jochs von 9, 10, 11 |
| 7 | Drehmomentmotor | 16 | Zahnbleche von 9, 10, 11 |
| 8 | Magnete | 17 | Spannungs-Zwischenkreis-Umrichter |
| 9 | Spulen | | |
| 10 | Spulen | 18 | Verbindungskabel |
| 11 | Spulen | 19 | Steckverbinder |
| 12 | Stator | 20 | Servocontrolleranschluss |
| 13.1 | Statorringsegment | 21 | Sternschaltelement |
| 13.2 | Statorringsegment | 22 | Abtastsensor |
| 13.3 | Statorringsegment | 23 | Winkelteilung |
| 13.4 | Statorringsegment | 24 | Gehäuse |
| 13.5 | Statorringsegment | | |

## Patentansprüche

1. Direktantrieb für eine Rotationsmaschine, insbesondere für eine Behälterbehandlungsmaschine, umfassend:
a) einen feststehenden Maschinenteil (1) und einen um eine vertikale Maschinenachse rotierenden Maschinenteil (2),
b) ein zwischen den Maschinenteilen (1, 2) angeordnetes Wälzlager (3),
c) das Wälzlager (3) besteht aus einem äußeren Lagerring (4), einem inneren Lagerring (5) sowie einer Vielzahl zwischen diesen Lagerringen (4, 5) abrollender Wälzkörper (6),
d) das rotierende Maschinenteil ist mit dem feststehenden Maschinenteil (1) über das Wälzlager (3) drehbar verbunden sowie durch einen Drehmomentmotor (7) antreibbar,
e) am rotierenden Maschinenteil (1) ist umlaufend eine Vielzahl von Magneten (8) vorgesehen,
f) am feststehenden Maschinenteil (1) ist ein aus einer Vielzahl elektrischer Spulen (9, 10, 11) bestehender Stator (12) angeordnet,
g) durch ein bei Bestromung des Stators (12) erzeugtes elektromagnetisches Feld ist im Zusammenwirken mit den Magneten (8) der rotierende Maschinenteil (2) in eine definierte Drehbewegung versetzbar,
h) der Stator (12) ist als sämtliche Magnete (8) am rotierenden Maschinenteil (2) lückenlos überdeckender Vollring von 360° ausgebildet,
i) der Stator (12) ist aus mehreren aneinander angrenzenden und durch eine elektrische Reihenschaltung miteinander verbundenen Statorringsegmenten (13.1, 13.2, 13.3, 13.4, 13.5) sowie aus mehreren zwischen den Statorringsegmenten (13.1, 13.2, 13.3, 13.4, 13.5) angeordneten Anschlagelementen (14.1, 14.2, 14.3, 14.4, 14.5) zur Fixierung der Statorringsegmente (13.1, 13.2, 13.3, 13.4, 13.5) in Umfangs- und Radialrichtung zusammengesetzt, wobei
j) die einzelnen Statorringsegmente (13.1, 13.2, 13.3, 13.4, 13.5) jeweils aus einem eisenmetallischem Joch (15) und aus einer Mehrzahl an dessen Ober- und Unterseite übereinander gestapelter Zahnbleche (16) bestehen, um deren Zähne Kupferwicklungen zur Bildung der einzelnen elektrischen Spulen (9, 10, 11) gewickelt sind,
k) die zwischen den Statorringsegmenten (13.1, 13.2, 13.3, 13.4, 13.5) angeordneten Anschlagelemente (14.1, 14.2, 14.3, 14.4, 14.5) bevorzugt die Form von Kreisringsegmenten aufweisen, die mit den verlängert ausgebildeten Jochs (15) und mit den radialen Seitenflächen der Statorringsegmente (13.1, 13.2, 13.3, 13.4, 13.5) in Anschlagkontakt stehen,
**dadurch gekennzeichnet,**
l) **dass** eines der zwischen den Statorringsegmenten (13.1, 13.2, 13.3, 13.4, 13.5) angeordneten Anschlagelemente (14.1, 14.2, 14.3, 14.4, 14.5) zugleich Halterung für einen Abtastsensor (22) ist, der mit einer inkrementellen oder absoluten, magnetischen oder induktiven Winkelteilung (23) am rotierenden Maschinenteil (1) ein Messsystem zur Positionsbestimmung des rotierenden Maschinenteils (1) bildet.

2. Direktantrieb nach Anspruch 1, **dadurch gekennzeichnet, dass** die Magnete (8) des Drehmomentmotors (7) und die Winkelteilung (23) des Messsystems bevorzugt an der Außenmantelfläche des mit dem rotierenden Maschinenteil (1) verbundenen äußeren Lagerrings (4) des Wälzlagers (3) angeordnet sind und der Stator (12) den äußeren Lagerring (4) umschließt.

3. Direktantrieb nach Anspruch 1, **dadurch gekennzeichnet, dass** die Statorringsegmente (13.1, 13.2, 13.3, 13.4, 13.5) und die Anschlagelemente (14.1, 14.2, 14.3, 14.4, 14.5) des Stators (12) sowie der Abtastsensor (22) und die Winkelteilung (23) des Messsystems einschließlich der Magnete (8) durch ein ringförmiges Gehäuse (24) aus Edelstahltopfblechen gegen Umgebungseinflüsse abgedichtet sind.

4. Direktantrieb nach Anspruch 1, **dadurch gekennzeichnet, dass** die einzelnen Spulen (9, 10, 11) der Statorringsegmente (13.1, 13.2, 13.3, 13.4, 13.5) in drei um 120° elektrisch versetzten Phasen mittels einer Sternschaltung elektrisch in Reihe geschaltet sind und über einen einzelnen Servocontroller mit einem Spannungs-Zwischenkreis-Umrichter (17) ansteuerbar sind.

5. Direktantrieb nach Anspruch 1, **dadurch gekennzeichnet, dass** alle benachbarten Statorringsegmente (13.1, 13.2, 13.3, 13.4, 13.5) durch je ein Verbindungskabel (18) mit einem Steckverbinder (19) miteinander verbunden sind und nur ein erstes und ein letztes Statorringsegment (13.1, 13.5) anstelle eines Verbindungskabels (18) einen Servocontrolleranschluss (20) bzw. Sternschaltelement (21) aufweist.

## Claims

1. Direct drive for a rotary machine, in particular for a container handling machine, comprising:
a) a stationary machine part (1) and a machine part (2) which rotates about a vertical machine axis,
b) an anti-friction bearing (3) which is arranged between the machine parts (1, 2),
c) the anti-friction bearing (3) consists of an outer bearing ring (4), an inner bearing ring (5) and a multiplicity of rolling bodies (6) which roll between the said bearing rings (4, 5),
d) the rotating machine part is connected rotatably to the stationary machine part (1) via the anti-friction bearing (3) and can be driven by way of a torque motor (7),
e) a multiplicity of magnets (8) are provided circumferentially on the rotating machine part (1),
f) a stator (12) which consists of a multiplicity of electric coils (9, 10, 11) is arranged on the stationary machine part (1),
g) the rotating machine part (2) can be set into a defined rotational movement by way of an electromagnetic field, which is generated upon energization of the stator (12), in interaction with the magnets (8),
h) the stator (12) is configured as a full ring of 360° which covers all the magnets (8) on the rotating machine part (2) without a gap,
i) the stator (12) is composed of a plurality of stator ring segments (13.1, 13.2, 13.3, 13.4, 13.5) which adjoin one another and are connected to one another by way of an electric series circuit, and of a plurality of stop elements (14.1, 14.2, 14.3, 14.4, 14.5) which are arranged between the stator ring segments (13.1, 13.2, 13.3, 13.4, 13.5) for fixing the stator ring segments (13.1, 13.2, 13.3, 13.4, 13.5) in the circumferential and radial direction,
j) the individual stator ring segments (13.1, 13.2, 13.3, 13.4, 13.5) consisting in each case of a ferrous metallic yoke (15) and of a plurality of toothed metal sheets (16) which are stacked above one another on the upper and lower side of the said yoke (15) and around the teeth of which copper windings for forming the individual electric coils (9, 10, 11) are wound,
k) the stop elements (14.1, 14.2, 14.3, 14.4, 14.5) which are arranged between the stator ring segments (13.1, 13.2, 13.3, 13.4, 13.5) preferably having the form of circular ring segments which are in bearing contact with the yokes (15) of extended configuration and; with the radial side faces of the stator ring segments (13.1, 13.2, 13.3, 13.4, 13.5), **characterized**
l) **in that** one of the stop elements (14.1, 14.2, 14.3, 14.4, 14.5) which are arranged between the stator ring segments (13.1, 13.2, 13.3, 13.4, 13.5) is at the same time a holder for a scanning sensor (22) which forms a measuring system for determining the position of the rotating machine part (1) with an incremental or absolute, magnetic or inductive angular division (23) on the rotating machine part (1).

2. Direct drive according to Claim 1, **characterized in that** the magnets (8) of the torque motor (7) and the angular division (23) of the measuring system are preferably arranged on the outer circumferential face of the outer bearing ring (4) of the anti-friction bearing (3), which outer bearing ring (4) is connected to the rotating machine part (1), and the stator (12) encloses the outer bearing ring (4).

3. Direct drive according to Claim 1, **characterized in that** the stator ring segments (13.1, 13.2, 13.3, 13.4, 13.5) and the stop elements (14.1, 14.2, 14.3, 14.4, 14.5) of the stator (12), and the scanning sensor (22) and the angular division (23) of the measuring system including the magnets (8) are sealed against environmental influences by way of an annular housing (24) comprising stainless steel pot sheets.

4. Direct drive according to Claim 1, **characterized in that** the individual coils (9, 10, 11) of the stator ring segments (13.1, 13.2, 13.3, 13.4, 13.5) are connected electrically in series in three phases which are offset electrically by 120° by means of a star circuit, and can be actuated via a single servocontroller having a voltage link converter (17).

5. Direct drive according to Claim 1, **characterized in that** all adjacent stator ring segments (13.1, 13.2, 13.3, 13.4, 13.5) are connected to one another by way of in each case one connecting cable (18) with a plug connector (19), and only a first and a last stator ring segment (13.1, 13.5) has a servocontroller connector (20) or star circuit element (21) instead of a connecting cable (18).

## Revendications

1. Mécanisme d'entraînement direct pour une machine rotative, notamment pour une machine de traitement de récipients, comprenant :
a) une partie de machine fixe (1) et une partie de machine tournante (2) autour d'un axe de machine vertical,
b) un palier de roulement (3) disposé entre les parties de machine (1, 2),
c) le palier de roulement (3) se compose d'une bague de roulement externe (4), d'une bague de roulement interne (5) ainsi que d'une pluralité d'éléments de roulement (6) qui roulent entre ces bagues de roulement (4, 5),
d) la partie de machine en rotation est reliée en rotation avec la partie de machine fixe (1) par le biais du palier de roulement (3) et peut être entraînée par un moteur couple (7),
e) une pluralité d'aimants (8) se trouvent sur la circonférence de la partie de machine tournante (1),
f) un stator (12) constitué d'une pluralité de bobines électriques (9, 10, 11) est disposé sur la partie de machine fixe (1),
g) la partie de machine tournante (2) peut être amenée dans un mouvement de rotation défini par un champ électromagnétique généré lors de l'alimentation électrique du stator (12) en coopération avec les aimants (8),
h) le stator (12) est configuré sous la forme d'un anneau plein de 360° qui recouvre en continu tous les aimants (8) sur la partie de machine tournante (2),
i) le stator (12) est assemblé à partir de plusieurs segments d'anneau de stator (13.1, 13.2, 13.3, 13.4, 13.5) juxtaposés les uns aux autres et reliés entre eux par un circuit série électrique ainsi qu'à partir de plusieurs éléments de butée (14.1, 14.2, 14.3, 14.4, 14.5) disposés entre les segments d'anneau de stator (13.1, 13.2, 13.3, 13.4, 13.5) et servant à immobiliser les segments d'anneau de stator (13.1, 13.2, 13.3, 13.4, 13.5) dans la direction périphérique et radiale,
j) les segments d'anneau de stator (13.1, 13.2, 13.3, 13.4, 13.5) individuels se composant respectivement d'une culasse (15) en métal ferreux et d'une pluralité de tôles dentées (16) empilées les unes au-dessus des autres sur son côté supérieur et inférieur, autour des dents desquelles sont enroulés des enroulements en cuivre destinés à former les bobines électriques (9, 10, 11) individuelles,
k) les éléments de butée (14.1, 14.2, 14.3, 14.4, 14.5) disposés entre les segments d'anneau de stator (13.1, 13.2, 13.3, 13.4, 13.5) possédant de préférence la forme de segments d'anneau circulaire qui se trouvent en contact de butée avec la culasse (15) de configuration prolongée et avec les surfaces latérales radiales des segments d'anneau de stator (13.1, 13.2, 13.3, 13.4, 13.5),
**caractérisé en ce**
l) **que** l'un des éléments de butée (14.1, 14.2, 14.3, 14.4, 14.5) disposés entre les segments d'anneau de stator (13.1, 13.2, 13.3, 13.4, 13.5) est en même temps un support pour un capteur à balayage (22) qui, avec un pas angulaire (23) incrémental ou absolu, magnétique ou inductif au niveau de la partie de machine tournante (1), forme un système de mesure destiné à déterminer la position de la partie de machine tournante (1).

2. Mécanisme d'entraînement direct selon la revendication 1, **caractérisé en ce que** les aimants (8) du moteur couple (7) et le pas angulaire (23) du système de mesure sont de préférence disposés au niveau de l'enveloppe extérieure de la bague de roulement externe (4) du palier de roulement (3) reliée à la partie de machine tournante (1) et le stator (12) entoure la bague de roulement externe (4).

3. Mécanisme d'entraînement direct selon la revendication 1, **caractérisé en ce que** les segments d'anneau de stator (13.1, 13.2, 13.3, 13.4, 13.5) et les éléments de butée (14.1, 14.2, 14.3, 14.4, 14.5) du stator (12) ainsi que le capteur à balayage (22) et le pas angulaire (23) du système de mesure, y compris les aimants (8), sont rendus étanches par rapport aux influences environnantes par un boîtier (24) de forme annulaire constitué de tôles en pot en acier inoxydable.

4. Mécanisme d'entraînement direct selon la revendication 1, **caractérisé en ce que** les bobines (9, 10, 11) individuelles des segments d'anneau de stator (13.1, 13.2, 13.3, 13.4, 13.5) sont branchées électriquement en série en trois phases décalées électriquement de 120° au moyen d'un circuit en étoile et peuvent être excitées par le biais d'un unique servocontrôleur comprenant un convertisseur statique de circuit intermédiaire de tension (17).

5. Mécanisme d'entraînement direct selon la revendication 1, **caractérisé en ce que** tous les segments d'anneau de stator (13.1, 13.2, 13.3, 13.4, 13.5) voisins sont reliés entre eux respectivement par un câble de raccordement (18) pourvu d'un connecteur à enfichage (19) et seul un premier et un dernier segment d'anneau de stator (13.1, 13.5) possède une borne de servocontrôleur (20) ou un élément de branchement en étoile (21) à la place d'un câble de raccordement (18).
